# EUROPÄISCHE PATENTSCHRIFT

(11) **EP 2 607 748 B1**
(45) Veröffentlichungstag und Bekanntmachung des Hinweises auf die Patenterteilung: **10.07.2019**
(21) Anmeldenummer: 12003979.7
(22) Anmeldetag: 22.05.2012
(51) Int. Cl.: F16H 7/08

(54) **Spannvorrichtung mit Dämpfungskanal in der Fluidzuführung**
Tensioning device with damping channel in the fluid supply
Dispositif de serrage avec canal d'amortissement dans l'introduction de liquide

(30) Priorität: 23.12.2011 DE 102011122185
(43) Veröffentlichungstag der Anmeldung: 26.06.2013
(73) Patentinhaber: IWIS Motorsysteme GmbH & Co. KG, 81369 München (DE)
(72) Erfinder: Perissinotto, Renzo, 85221 Dachau (DE); Schelzig, Ulrich, 81271 München (DE)
(74) Vertreter: Grünecker Patent- und Rechtsanwälte PartG mbB

(56) Entgegenhaltungen:
- EP-A1- 2 458 246
- DE-C1- 4 311 056
- DE-U1-202007 002 456
- DE-U1-202009 003 615
- US-A1- 2010 130 320

## Beschreibung

Die vorliegende Erfindung betrifft eine Spannvorrichtung für ein flexibles Antriebsmittel, wie Ketten oder Riemen, mit einem Gehäuse, einem im Gehäuse verschiebbar angeordneten Spannkolben, einer zwischen dem Gehäuse und dem Spannkolben gebildeten Druckkammer für Hydraulikfluid, einer im Gehäuse angeordneten Fluidzuführung zur Versorgung der Druckkammer mit Hydraulikfluid, einer mit der Druckkammer in Fluidverbindung stehenden, die Einfahrbewegung des Spannkolbens dämpfenden Dämpfungseinrichtung und einer mit der Druckkammer in Fluidverbindung stehenden, am Spannkolben oder zwischen Spannkolben und Gehäuse angeordneten Entlüftungseinrichtung, wobei die Dämpfungseinrichtung mindestens einen, in beide Strömungsrichtungen offenen Dämpfungskanal als Bestandteil der Fluidzuführung derart aufweist, dass im Betrieb zumindest ein Teil der Versorgungsströmung durch den mindestens einen Dämpfungskanal hindurch in die Druckkammer einleitbar ist. Des Weiteren sind die Dämpfungseinrichtung und die Entlüftungseinrichtung derart miteinander gekoppelt, dass eine Abflussströmung aus der Druckkammer kombiniert über die Dämpfungseinrichtung und die Entlüftungseinrichtung erfolgt und die Versorgungsströmung im Wesentlichen unabhängig von der Entlüftungseinrichtung erfolgt. Die Fluidzuführung weist einen Versorgungseinsatz auf, der passgenau in das Gehäuse eingesetzt ist.

Bei den meisten dieser Spannvorrichtungen wird die Dämpfungseinrichtung dadurch gebildet, dass zwischen dem Gehäuse und dem Spannkolben ein Leckspalt vorhanden ist, durch den gedrosselt ein Leckstrom des Hydraulikfluids nach außen fließen kann. Die Größe des Leckspaltes bestimmt dabei, das von der Spannvorrichtung zu erwartende Dämpfungsverhalten. Die Spannvorrichtungen sind in aller Regel an die Motorölhydraulik eines Verbrennungsmotors angeschlossen, weil sie vorrangig bei Steuertrieben, insbesondere Steuerkettentrieben Anwendung finden. Dieser Steuertrieb verbindet die Kurbelwelle mit einer oder mehreren Nockenwellen. Ein Nachteil einer solchen Leckspaltdämpfung besteht neben dem systembedingten Motoröldurchsatz durch den Leckspalt auch darin, dass bei druckloser Druckkammer nach und nach das Hydraulikfluid durch diesen entweichen kann. Damit die entweichende Ölmenge nicht zu groß ist, ist in aller Regel in der Druckkammer ein Füllkörper angeordnet. Des Weiteren wird zwischen Gehäuse und Spannkolben bei den meisten Ausführungsformen eine Schraubendruckfeder verwendet. Die Druckfeder sorgt auch bei druckloser Druckkammer für eine gewisse Mindestvorspannung der Spannvorrichtung. Des Weiteren kann sich insbesondere bei Stillstand des Verbrennungsmotors Luft in der Druckkammer ansammeln. Diese Luft würde die Funktion der Spannvorrichtung negativ beeinflussen, weil sie ein anderes Kompressionsverhalten aufweist als das Hydraulikfluid. Deshalb ist eine Entlüftungseinrichtung vorgesehen, mittels der in der Druckkammer eingeschlossene Luft, insbesondere beim Motorstart nach außen entweichen kann. Aufgrund des Füllkörpers ist z. B. bei einem Motorstart die nachzufüllende Ölmenge nicht allzu groß. Dennoch gibt es starke Bestrebungen, den Öldurchsatz durch solche Spannvorrichtungen zu reduzieren, nicht zuletzt, um kleinere Ölpumpen verwenden zu können.

Eine gattungsgemäße Spannvorrichtung ist in der US 2010/0130320 A1 beschrieben. Die Zuführung von Hydrauliköl erfolgt über eine Blende, die Entlüftung mittels einer seitlich am Gehäuse angeordneten Schraube und die Dämpfung mittels einer Kombination aus der Blende und einem Leckspalt zwischen Kolben und Gehäuse

Es ist daher die Aufgabe der vorliegenden Erfindung, eine Spannvorrichtung der eingangs genannten Art bereitzustellen, bei der mit einfach zu variierenden Mitteln das passende Dämpfungsverhalten erzeugt werden kann.

Bei einer gattungsgemäßen Spannvorrichtung ist hierzu vorgesehen, dass der mindestens eine Dämpfungskanal zwischen dem Versorgungseinsatz und dem Gehäuse ausgebildet ist. Durch Verwendung eines solchen Einsatzes lässt sich sehr leicht der mindestens eine Dämpfungskanal erzeugen und auch variieren. Hierdurch kann mit einfachen Mitteln Einfluss auf das Dämpfungsverhalten der Dämpfungseinrichtung genommen werden, indem der für die gewünschte Anwendung passende Versorgungseinsatz verwendet wird.

Zumindest ein Teil der Dämpfung wird also von mindestens einem Dämpfungskanal (Drosselkanal) gebildet, der das Hydraulikfluid beim Dämpfungsvorgang wieder in die Fluidzuführung zurückdrückt. Aufgrund der Kanalform erfolgt dieser Vorgang gedrosselt und gegen den Druck der Ölversorgung. Das hier zur Dämpfung verwendete Ölvolumen geht also nicht verloren, sondern steht gleich wieder in der Fluidzuführung für eine Zuführung in die Druckkammer zur Verfügung. Die Dämpfungseinrichtung und die Entlüftungseinrichtung bilden somit in aller Regel keine bauliche Einheit, sondern wirken an unterschiedlichen Stellen mit der Druckkammer zusammen. Bei den überwiegenden Fällen wird die Entlüftung in bekannter Weise am Spannkolben stattfinden, während die Dämpfungseinrichtung über den Dämpfungskanal unmittelbar mit der Hydraulikfluidversorgung in Verbindung steht. Die Entlüftungseinrichtung ist an der Zuleitung der Versorgungsströmung im Wesentlichen nicht beteiligt. Selbstverständlich weist die Entlüftungseinrichtung eine gewisse Aufnahmekapazität für Hydraulikfluid auf, das bei Entstehung eines Unterdrucks in der Druckkammer wieder in die Druckkammer zurückgesaugt wird. Allerdings hat die Entlüftungseinrichtung keine Verbindung zur Fluidzuführung im eigentlichen Sinne. Erfindungsgemäß soll der durch die Aufnahmekapazität der Entlüftungseinrichtung zufließende Hydraulikfluidanteil nicht mehr als 2 %, bevorzugt nicht mehr als 1 %, am Gesamtzuflussvolumen in die Druckkammer haben.

Die mit der Druckkammer in Fluidverbindung stehende Entlüftungseinrichtung entlüftet bevorzugt unabhängig von dem mindestens einen Dämpfungskanal. In vielen Fällen erfolgt die Entlüftung über den Spannkolben. So sind Konstruktionen bekannt, bei denen in der Stirnfläche des Spannkolbens eine Entlüftungsbohrung angeordnet ist, die unter Zwischenschaltung eines Füllkörpers mit der Druckkammer in Fluidverbindung steht. Der Füllkörper kann hierzu z. B. entsprechende Kanäle bereitstellen, die auf eine Entlüftung abgestimmt sind. Zwischen der Entlüftungsbohrung und der Druckkammer kann der Füllkörper aber auch eine zusätzliche Dämpfungsfunktion übernehmen, in die Kanäle und eventuell Speicherräume mit ausreichendem Volumen zur Aufnahme von Hydraulikfluid vorhanden sind. Der Konstrukteur hat dann an mehreren Stellen der Spannvorrichtung die Möglichkeit, auf das Dämpfungsverhalten Einfluss zu nehmen, sei es z. B. am Versorgungseinsatz und/oder am Füllkörper. Bevorzugt kann hierzu die Entlüftungseinrichtung am Spannkolben vorgesehen sein. Gemäß bevorzugter Ausführungsformen soll der Anteil der Dämpfungseinrichtung an der Gesamtdämpfung des Spannkolbens mindestens 50 %, bevorzugt mindestens 60 %, betragen.

Nachdem zumindest ein Teil der Dämpfung im Inneren der Spannvorrichtung stattfindet und zu diesem Zweck kein Öl nach außen dringt und von der Ölpumpe erneut gefördert werden muss, kann gemäß vorteilhafter Weiterbildungen die Spaltabstimmung zwischen Spannkolben und Gehäuse hinsichtlich Ölverlust optimiert werden. Dieser Spalt kann bei vorteilhaften Weiterbildungen für die Dämpfung keine oder nur noch eine untergeordnete Rolle spielen. Für die Erfindung soll es bevorzugt ausreichend sein, dass die erfindungsgemäße Dämpfungseinrichtung mittels des mindestens einen Dämpfungskanals als Bestandteil der Fluidzuführung zu mehr als 50 % Anteil an der kombinierten Gesamtdämpfung der Dämpfungseinrichtung und des Leckspalts haben soll, bevorzugt sind mehr als 80 % und weiter bevorzugt mehr als 95 %. Bevorzugt wird also zwischen dem Spannkolben und dem Gehäuse eine wirtschaftlich sinnvolle Spielpassung verwendet, die aber eine hinreichende Abdichtung hinsichtlich eines Leckagestroms bereitstellt. Ein Vorteil besteht auch darin, dass bei einer solchen engeren Passung eine kürzere Führungslänge zwischen Spannkolben und Gehäuse verwendet werden kann. Eine zusätzliche Abdichtung, z. B. mittels O-Ring kann vorgesehen werden. Ein wesentlicher Vorteil der Erfindung ist darin zu sehen, dass das benötigte Hydraulikvolumen verringert wird, da die für die Dämpfung benötigte Fluidmenge zumindest zum Teil innerhalb der Spannvorrichtung zur Verfügung steht. Dieser geringere Hydraulikfluidverbrauch beseitigt auch die Probleme bei Unterversorgung. Eine Standardisierung von Fertigungsmaßen von Kolben und Gehäuse (insbesondere Kolbenaußendurchmesser und Gehäusebohrungsdurchmesser) lässt derartige standardisierte Kolbengehäuse für vielfältigere Einsatzzwecke zu, da die Dämpfungsabstimmung dann zumindest zum Teil über die jeweilige Ausformung des mindestens einen Dämpfungskanals erfolgt.

Zu unterscheiden sind die erfindungsgemäßen Maßnahmen von Entlüftungseinrichtungen, die insbesondere für den Über-Kopf-Einbau von Spannvorrichtungen entwickelt worden sind. So offenbart die EP 1602857 B1 eine Spannvorrichtung mit einem speziell ausgestalteten Rückschlagventilgehäuse, das einen gedrosselten Bypass für eine Entlüftung in den Ölzuführkanal enthält. Zwar mag eine solche Ausgestaltung auch Einfluss auf das Dämpfungsverhalten der Spannvorrichtung haben; jedoch erfolgt die Zufuhr von neuem Hydrauliköl in die Druckkammer aufgrund der hinsichtlich des Mediums Luft abgestimmten Drosselwirkung wohl ausschließlich über das geöffnete Rückschlagventil. Eine ähnliche Entlüftungskonstruktion für über Kopf eingebaute Spannvorrichtungen offenbart auch die US 5643117. Gemäß dieser Druckschrift wird eine spezielle Drosselscheibe zur Aufnahme des Rückschlagventils verwendet. Die Zuführung neuen Hydraulikfluids erfolgt bei beiden bekannten Konstruktionen jedoch hauptsächlich über das geöffnete Rückschlagventil. Eine Beteiligung der Entlüftungskonstruktion an diesem Zufluss ist nicht beschrieben. Im Gegensatz zu diesen bekannten Konstruktionen erlaubt die Erfindung auch Ausführungsformen, bei denen der Spannkolben nach oben drückt. Darüber hinaus verbleibt bei dieser bekannten Konstruktion die abgeführte Luft im druckbeaufschlagten Versorgungsweg, was zu Problemen führen kann.

Bevorzugt kann das Gehäuse eine Aufnahmebohrung aufweisen, in der der Spannkolben verschiebbar aufgenommen ist, wobei am Grund der Aufnahmebohrung der Versorgungseinsatz passgenau eingesetzt ist und der mindestens eine Dämpfungskanal zwischen Außenfläche des Versorgungseinsatzes und Innenfläche der Aufnahmebohrung gebildet ist. Hierdurch kann der Versorgungseinsatz sehr einfach von vorne in die Aufnahmebohrung eingeschoben werden, bevor der Spannkolben in das Gehäuse eingefügt wird. Durch das passgenaue Einsetzen lässt sich sehr leicht ein in geeigneter Weise abgedichteter Dämpfungskanal erzielen. Günstigerweise könnte der Versorgungseinsatz hierzu in die Aufnahmebohrung eingepresst sein.

Eine weitere Ausführungsform sieht vor, dass der Versorgungseinsatz einen ersten Abschnitt und einen zweiten, im Umfang größeren Abschnitt aufweist, der mindestens eine Dämpfungskanal in den zweiten Abschnitt eingeformt ist und zwischen dem ersten Abschnitt und dem Gehäuse ein Strömungsspalt gebildet ist, der Bestandteil der Fluidzuführung ist. Hierdurch kann die Aufnahmebohrung ihren Durchmesser beibehalten und durch die Formgebung des Versorgungseinsatzes wird ein dem mindestens einen Dämpfungskanal das Hydraulikfluid zuleitender Strömungsspalt gebildet. Die Einformung des mindestens einen Dämpfungskanals in dem Versorgungseinsatz erleichtert die Herstellung insgesamt. Zum Beispiel besteht durchaus die Möglichkeit, den Versorgungseinsatz als Spritzgussteil herzustellen.

Des Weiteren kann das Gehäuse eine an eine externe Ölversorgung anschließbare Versorgungsbohrung als Bestandteil der Fluidzuführung aufweisen, die in den Strömungsspalt zwischen Gehäuse und Versorgungseinsatz mündet. Hierbei kann es sich um eine einfache Querbohrung zur Aufnahmebohrung für den Spannkolben handeln, so dass die hauptsächliche Ausformung der daran anschließenden Strömungskanäle im Wesentlichen durch den Versorgungseinsatz erfolgt.

Um eine ausreichende Dämpfung erzielen zu können, und Dämpfungskanäle mit ausreichender Länge bereitstellen zu können, kann der mindestens eine Dämpfungskanal wendelförmig am Umfang des Versorgungseinsatzes umlaufen. Dabei ist ein teilweises Umlaufen vollständig ausreichend, je nach Abhängigkeit der gewählten Steigung.

Bevorzugt können am Versorgungseinsatz mindestens zwei Dämpfungskanäle vorgesehen sein, wobei die Bereiche zwischen den Dämpfungskanälen im Wesentlichen abdichtend an dem Gehäuse anliegen. Hierdurch ist sichergestellt, dass die Dämpfung in genau vorgegebener Weise von den Dämpfungskanälen vorgegeben ist und keine Leckageströmung an dem Versorgungseinsatz vorbei erfolgt.

Gemäß einer bevorzugten Ausführungsform kann die Zuführung sämtlicher, von der Ölversorgung kommender Versorgungsströme durch den Dämpfungskanal in die Druckkammer erfolgen. Unter dem Begriff "sämtliche Versorgungsströme" ist die von außen der Spannvorrichtung zugeführte Versorgungsströmung mit Hydraulikfluid gemeint. Andere interne Speichermechanismen innerhalb der Spannvorrichtung können zusätzlich Anwendung finden. Im Umkehrschluss bedeutet dies, dass die Versorgung der Druckkammer mit Hydraulikfluid ohne Rückschlagventil stattfindet, weil der Dämpfungskanal jederzeit für die Dämpfung und die Versorgung zur Verfügung stehen muss. Die Spannvorrichtung ist somit für diesen Versorgungszweck als rückschlagsventilfrei im Bereich der Fluidzuführung anzusehen. Die Abstimmung des Dämpfungsverhaltens erfolgt selbstverständlich aufgrund der geeigneten Wahl der Anzahl, der Größe, der Querschnittsform und Verlaufsform des einen oder der mehreren Dämpfungskanäle.

Alternativ kann bei einer Ausführungsform auch vorgesehen sein, dass die Fluidzuführung ein zum Dämpfungskanal hydraulisch parallel geschaltetes Rückschlagventil aufweist. Je nach Ausgestaltung des Rückschlagventils kann die Zuführung von Hydraulikfluid in die Druckkammer sehr schnell und mit relativ geringem Strömungswiderstand erfolgen, während beim Einfahren des Spannkolbens, bei dann geschlossenem Rückschlagventil, eine sehr gute Dämpfung mittels eines nur gegen einen großen Strömungswiderstand bereitstellenden Dämpfungskanals gegeben ist.

Vorteilhafterweise erfolgt bei einer solchen Variante daher hauptsächlich die Zuströmung in die Druckkammer mittels des Rückschlagventils. Hierzu kann vorgesehen sein, dass der Strömungswiderstand des mindestens einen Dämpfungskanals und der Strömungswiderstand des Rückschlagventils in Öffnungsrichtung so aufeinander abgestimmt sind, dass zumindest in einem Spannkolbenhubfrequenzbereich von 50 bis 200 Hz mehr als 90 %, bevorzugt mehr als 94 %, der Versorgungsströmung über das Rückschlagventil der Druckkammer zuleitbar ist. Die Spannkolbenhubfrequenz wurde als Basis für die obige Betrachtung herangezogen, weil diese auch das dynamische Verhalten des Rückschlagventils in die Betrachtung mit einbindet. Mit zunehmender Hubfrequenz nimmt nämlich der Zufluss über das Rückschlagventil etwas ab, während der Zufluss über den mindestens einen Dämpfungskanal etwas zunimmt. So liegt z.B. bei einer Variante bei einer Hubfrequenz von 50 Hz der Anteil des Versorgungsstroms durch das Rückschlagventil bei 97 %, während es bei 200 Hz nur noch 95 % sind. Entsprechend verändert sich der Anteil der Versorgungsströmung durch den mindestens einen Dämpfungskanal von 3 auf 5 %.

Des Weiteren kann vorgesehen sein, dass der Strömungswiderstand des mindestens einen Dämpfungskanals und der Strömungswiderstand der Entlüftungseinrichtung so aufeinander abgestimmt sind, dass zumindest in einem Spannkolbenhubfrequenzbereich von 50 bis 200 Hz höchstens 50 %, bevorzugt höchstens 45 %, der Abflussströmung über die Entlüftungseinrichtung aus der Druckkammer ableitbar ist. Vorrangig soll daher die Dämpfung durch den mindestens einen Dämpfungskanal (Dämpfungsanteil größer als 50 %) bestimmt sein. Aufgrund des dynamischen Verhaltens des Rückschlagventils nimmt dieses aber bei zunehmender Spannkolbenhubfrequenz an der Abflussströmung teil. Zwar bleibt in aller Regel bei diesem Spannkolbenhubfrequenzbereich der Anteil des Rückschlagventils sowohl hinter dem Anteil durch den mindestens einen Dämpfungskanal als auch dem Anteil durch die Entlüftungseinrichtung zurück. Jedoch spielt das Rückschlagventil bei der Gesamtbetrachtung über den hier angegebenen Bereich doch eine beachtliche Rolle. Der Anteil der Entlüftungseinrichtung nimmt mit steigender Spannkolbenhubfrequenz im angegebenen Bereich (ausgehend von 50 Hz) ab, so dass es zuerst einmal zum Anstieg des Anteils der Abflussströmung durch den mindestens einen Dämpfungskanal kommt. Dies dürfte in vielen Fällen bis zu einer Hubfrequenz von 100 Hz zutreffen. Darüber hinaus übernimmt das Rückschlagventil zunehmend einen Teil der Abflussströmung, so dass der relative Anteil der Abflussströmung, der durch den Dämpfungskanal abströmt, wieder abnimmt. Es gibt durchaus Varianten, bei denen bei einer Spannkolbenhubfrequenz von 200 Hz der über das Rückschlagventil abströmende Volumenstrom 13 % der gesamten Abflussströmung beträgt. Bei niedrigen Frequenzen kommt es aber maßgeblich auf die Abstimmung zwischen dem mindestens einen Dämpfungskanal und der Entlüftungseinrichtung an, da diese ihren Dämpfungsanteil untereinander aufteilen. Der Anteil des mindestens einen Dämpfungskanals liegt allerdings zumeist über 50 % bei dem gesamten hier angegeben Hubfrequenzbereich. Hierdurch ist sichergestellt, dass selbst bei Verwendung eines Rückschlagventils die entsprechend gewünschten Einspareffekte hinsichtlich des Öldurchsatzes gegeben sind.

Eine günstige Ausführungsform sieht vor, dass der Versorgungseinsatz aus einem weicheren Material als das Material des Spannkolbens hergestellt ist. Der Versorgungseinsatz kann bei geeigneter Materialwahl auch als Aufschlagdämpfer für den Spannkolben dienen. Hierdurch werden unliebsame Geräusche vermindert oder sogar vermieden. Darüber hinaus kann das Material des Versorgungseinsatzes auch weicher sein als das des Gehäuses. Hierdurch lässt sich der Versorgungseinsatz in die Aufnahmebohrung einpressen, ohne dass die Aufnahmebohrung an ihrer Innenoberfläche ungünstige Oberflächenveränderungen oder Zerstörungen erfährt.

Gemäß einer besonders günstigen Ausführungsform wird auf die Dämpfung mittels eines Leckagespaltes zwischen dem Spannkolben und dem Gehäuse vollständig verzichtet. Hierzu kann zwischen Spannkolben und Aufnahmebohrung im Gehäuse eine Gleitdichtung angeordnet sein. Zum einen kann dann die Dämpfung vollständig über den mindestens einen Dämpfungskanal oder es können zusätzliche Maßnahmen z. B. aufgrund eines besonders ausgestalteten Füllkörpers vorgenommen werden, wodurch ebenfalls ein Dämpfungsbeitrag geleistet wird.

Des Weiteren bezieht sich die Erfindung auf eine Spannvorrichtungsserie, umfassend mindestens eine erste und mindestens eine zweite Spannvorrichtung nach einem der Ansprüche 1 bis 11, wobei die erste und die zweite Spannvorrichtung eine Gehäusebohrung zur Aufnahme des Spannkolbens und einen Spannkolben von jeweils im Durchmesser standardisierter gleicher Größe aufweisen und sich die Dämpfungseinrichtung der mindestens einen ersten Spannvorrichtung von der Dämpfungseinrichtung der mindestens einem zweiten Spannvorrichtung in der Dämpfungscharakteristik unterscheidet, und wobei die unterschiedlichen Dämpfungscharakteristiken mittels unterschiedlich bemaßter und/oder ausgestalteter Versorgungseinsätze erhalten sind.

Im günstigsten Fall kann eine solche Spannvorrichtungsserie dazu führen, dass die Gehäuse und die Spannkolben entsprechend identisch ausgestaltet sind, während hauptsächlich ein anderer Versorgungseinsatz für die jeweils gewünschte Dämpfungscharakteristik eingesetzt wird. Dies kann so weit geführt werden, dass bis auf den Versorgungseinsatz sämtliche anderen Bestandteile der ersten und zweiten Spannvorrichtung identisch sind. Hierdurch lassen sich erhebliche Kosten einsparen, obwohl die Dämpfung an individuell unterschiedliche Einsatzerwartungen angepasst werden kann. Insbesondere im Einsatz bei Steuerkettentrieben von Verbrennungsmotoren lässt sich durch den Austausch des Versorgungseinsatzes eine Dämpfungsanpassung herbeiführen. Eine solche Maßnahme stellt einen entscheidenden Vorteil bei dem auf diesem Gebiet üblichen vorliegenden Kostendruck dar. Zusätzlich weist der Versorgungseinsatz dieser Spannvorrichtung die von der erfindungsgemäßen Konstruktion zu erwartenden geringen bis gar keine Hydraulikfluidverluste auf. Selbstverständlich kann die Serie beliebig weitergeführt werden, so dass auch mehr als zwei Spannvorrichtungen mit unterschiedlicher Dämpfung in der Serie enthalten sein können.

Darüber hinaus bezieht sich die Erfindung auf ein Umschlingungsgetriebe mit einem flexiblen Antriebsmittel wie Kette oder Riemen, mindestens zwei mit dem Antriebsmittel in Wirkbeziehung stehende Getrieberäder und einer Spannvorrichtung nach einem der Ansprüche 1 bis 11. Die Spannvorrichtung drückt bei einem Kettentrieb auf eine schwenkbar angeordnete Spannschiene, die sich an die Kette anlegt und so die Kette zwischen den Getrieberädern spannt. Die Versorgung mit Hydraulikfluid ist bei einem derartigen Umschlingungsgetriebe einfacher als im Vergleich zum Stand der Technik.

Die Erfindung bezieht sich auch auf eine Umschlingungsgetriebeserie, umfassend mindestens ein erstes Umschlingungsgetriebe und mindestens ein zweites Umschlingungsgetriebe, wobei das erste Umschlingungsgetriebe eine erste Spannvorrichtung aus einer Spannvorrichtungsserie gemäß Anspruch 12, und das zweite Umschlingungsgetriebe eine zweite, eine unterschiedliche Dämpfungscharakteristik aufweisende Spannvorrichtung aus einer Spannvorrichtungsserie gemäß Anspruch 12 aufweist. Durch die Verwendung von standardisierten Beurteilen lassen sich hier Kosten einsparen. Aber auch im Betrieb wirken sich die Vorteile der eingesetzten Spannvorrichtungen positiv auf die Umschlingungsgetriebeserie aus.

Die Erfindung kann kombiniert werden mit anderen Maßnahmen zur Reduzierung des Öldurchsatzes. Zum Beispiel kann die Entlüftungseinrichtung eine erweiterte Speicherkapazität für Hydraulikfluid bereitstellen. Günstigerweise kann hierzu ein Füllkörper im Inneren des Spannkolbens entsprechende Ausgestaltungen aufweisen, so dass gleichzeitig eine geeignete Entlüftung und Speicherkapazität von Hydraulikfluid gegeben ist. Üblicherweise wirkt dann die Entlüftungseinrichtung auch verstärkt als Dämpfungseinrichtung. Im günstigsten Fall bewegt sich das Hydraulikfluid im Arbeitsbereich der Spannvorrichtung innerhalb der Entlüftungseinrichtung hin und her, ohne dass über die Entlüftungsöffnung allzu viel von dem Hydraulikfluid entweicht. Dies bedingt eine genaue Abstimmung der Drosselkanäle und/oder Speicherkammern innerhalb der Entlüftungseinrichtung auch im Hinblick auf die Dämpfungseinrichtung gemäß dieser Erfindung.

Darüber hinaus besteht auch die Möglichkeit, weitere Ausgestaltungen vorzunehmen. Zum Beispiel kann die Entlüftungseinrichtung ein Überdruckventil aufweisen, das ab einem bestimmten Überdruck in der Druckkammer öffnet, um Spannungsspitzen abzubauen. Üblicherweise erfolgt die Entlüftung als Bypass zu einem federvorbelasteten Ventilkörper, der für die Überdruckfunktion sorgt. Alternativ oder zusätzlich kann auch eine Rückfahrsperre an der Spannvorrichtung vorgesehen sein, die das Einfahren des Spannkolbens über einen bestimmten Punkt hinaus verhindert. Üblicherweise handelt es sich bei diesen Rückfahrsperren um selbst nachstellende Einrichtungen nach Art eines Ratschensystems, um Verschleiß im flexiblen Antriebsmittel ausgleichen zu können und eine Verschiebung des Arbeitsbereichs der Spannvorrichtung zu bewirken.

Im Folgenden wird die Erfindung anhand von Zeichnungen näher erläutert. Es zeigen:

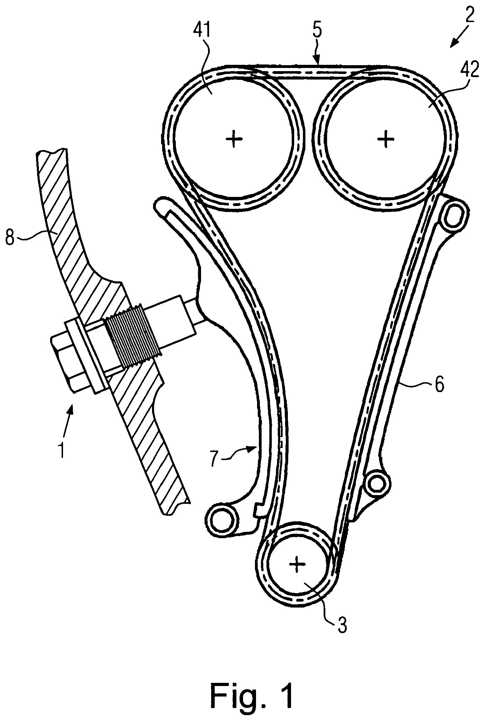

- Fig. 1: eine schematische Darstellung eines Kettentriebs mit einem Einschraubkettenspanner,
- Fig. 2: eine perspektivische Schnittdarstellung einer ersten Ausführungsform des Einschraubkettenspanners aus Fig. 1, wobei der Versorgungseinsatz nicht geschnitten ist,
- Fig. 3: den hinteren Teil des Kettenspanners aus Fig. 2 in einer perspektivischen geschnittenen Darstellung, wobei auch der Versorgungseinsatz entsprechend geschnitten wurde,
- Fig. 4: eine perspektivische Darstellung des Versorgungseinsatzes aus Fig. 2 von vorne auf die Stirnfläche gesehen,
- Fig. 5: den Versorgungseinsatz aus Fig. 4 in einer perspektivischen Darstellung auf die Rückseite gesehen,
- Fig. 6: eine perspektivische Darstellung einer Spannfeder zum Einsatz in einem Einschraubkettenspanner nach Fig. 2,
- Fig. 7: eine perspektivische Darstellung eines Füllkörpers zum Einsatz in einen Einschraubkettenspanner nach Fig. 2,

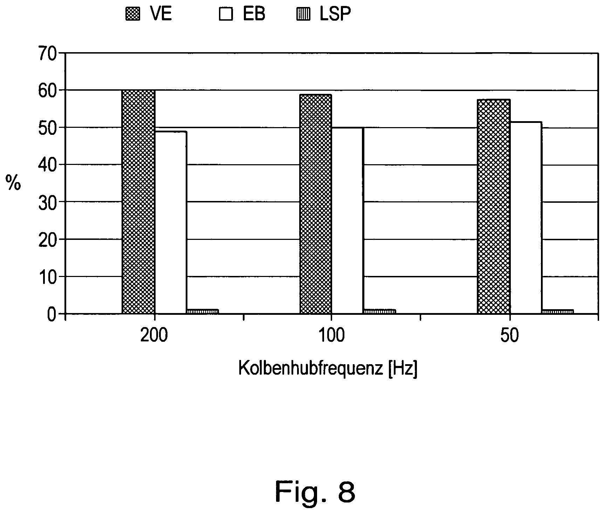

- Fig. 8: ein Diagramm über die Verteilung der Abflussströmung aus der Druckkammer in Abhängigkeit verschiedener Kolbenhubfrequenzen für die erste Ausführungsform,
- Fig. 9: eine perspektivische Schnittdarstellung einer zweiten Ausführungsform des Einschraubkettenspanners aus Fig. 1, wobei der Versorgungseinsatz nicht geschnitten ist,
- Fig. 10: den hinteren Teil des Kettenspanners aus Fig. 2 in einer perspektivischen geschnitten Darstellung, wobei auch der Versorgungseinsatz entsprechend geschnitten wurde,
- Fig. 11: eine perspektivische Darstellung des Versorgungseinsatzes aus Fig. 9 von vorne auf die Stirnseite gesehen,
- Fig. 12: den Versorgungseinsatz aus Fig. 11 in einer perspektivischen Darstellung auf die Rückseite gesehen,
- Fig. 13: ein Diagramm über die Verteilung der Abflussströmung aus der Druckkammer in Abhängigkeit verschiedener Kolbenhubfrequenzen für die zweite Ausführungsform,
- Fig. 14: ein Diagramm über die Verteilung der Zuströmung in die Druckkammer in Abhängigkeit verschiedener Kolbenhubfrequenzen für die zweite Ausführungsform,
- Fig. 15: eine erste Ausführungsform einer Spannvorrichtungsserie in geschnittener perspektivischer Darstellung, wobei die Versorgungseinsätze nicht geschnitten wurden,
- Fig. 16: eine zweite Ausführungsform einer Spannvorrichtung in geschnittener perspektivischer Darstellung, wobei die Versorgungseinsätze nicht geschnitten wurden, und
- Fig. 17: eine schematische Darstellung einer Umschlingungsgetriebeserie.

Die Spannvorrichtung 1 wird im vorliegenden Fall für einen Kettentrieb 2 eingesetzt. Bei dem Kettentrieb 2 handelt es sich um einen Steuerkettentrieb eines Verbrennungsmotors. Der Kettentrieb 2 umfasst ein Kurbelwellenkettenrad 3, zwei nebeneinander angeordnete Nockenwellenkettenräder 4.1 und 4.2. Eine Steuerkette 5 ist als flexibles Antriebsmittel um die Kettenräder 3, 4.1 und 4.2 herum gelegt. Zwischen Kurbelwellenkettenrad 3 und dem Nockenwellenkettenrad 4.2 befindet sich eine Führungsschiene 6, an der die Steuerkette 5 entlanggleitet. Auf der gegenüberliegenden Seite befindet sich zwischen dem Kurbelwellenkettenrad 3 und dem Nockenwellenkettenrad 4.1 eine schwenkbar gelagerte und mittels der Spannvorrichtung 1 andrückbare Spannschiene 7. Sowohl die Führungsschiene 6 als auch die Spannschiene 7 weisen einen Basisträger und einen darauf angeordneten Gleitbelagkörper auf. Im vorliegenden Fall handelt es sich bei der Spannvorrichtung 1 um einen Einschraubkettenspanner, der in einen Bestandteil des Motorblocks 8 eingeschraubt ist und mit seinem Spannkolben 9 auf die Spannschiene 7 aufdrückt, so dass diese mit einer vorbestimmten Kraft an die Steuerkette 5 gedrückt wird.

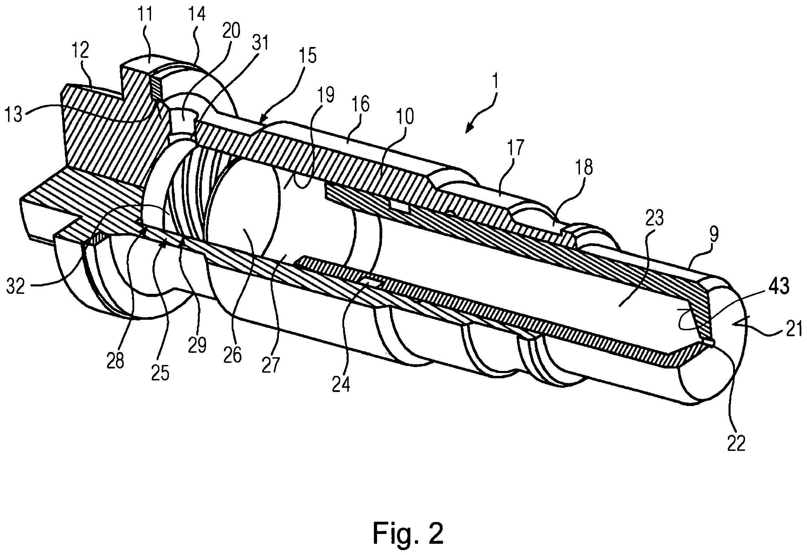

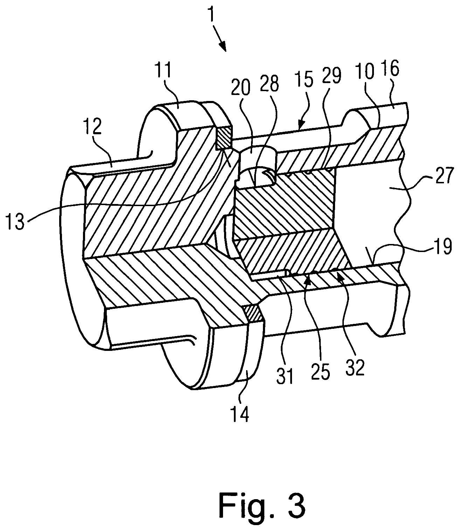

Im Folgenden wird nunmehr anhand der Fig. 2 und 3 der Aufbau in einer ersten Ausführungsform dieses Einschraubkettenspanners näher erläutert. Die Spannvorrichtung 1 umfasst ein Gehäuse 10, das als Dreh-/Frästeil ausgestaltet ist. Das Gehäuse 10 teilt sich auf in einen Kopfbereich und einen Einschraubbereich. Der Kopfbereich weist einen Anlageflansch 11 und zum Ende hin einen Sechskantansatz 12 auf, an dem ein Werkzeug zum Einschrauben des Gehäuses 10 angreifen kann. An der Unterseite des Flansches 11 ist ein Dichtungssitz 13 vorgesehen, auf dem eine im Querschnitt rechteckige Ringdichtung 14 aufsitzt. An diesen Dichtungssitz 13 schließt sich eine Versorgungsringnut 15 an, die in der späteren Einschraublage mit einer Ölzuführung im Motorblock 8 korrespondiert, so dass Motoröl dieser Versorgungsringnut 15 zuleitbar ist. An diese Versorgungsringnut 15 schließt sich ein Gewindebereich an, der in ein entsprechend passendes Gegengewinde im Motorblock 8 einschraubbar ist. Der vordere zylindrische Abschnitt 17 ist mit einer weiteren Ringnut 18 versehen, die je nach Ausführungsform zur Aufnahme eines Bauteils für eine Rückfahrsperreneinrichtung versehen werden kann.

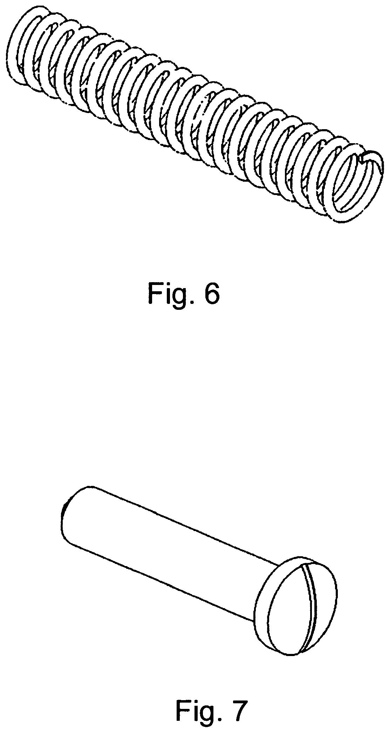

Im Gehäuse 10 ist eine zylindrische, nach vorne hin offene Aufnahmebohrung 19 eingeformt, in der der Spannkolben 9 im Wesentlichen passgenau eingesetzt ist und sich hin- und herbewegen kann. Zwischen der Aufnahmebohrung 19 und der Versorgungsringnut 15 ist eine sich radial erstreckende Versorgungsbohrung 20 vorgesehen. Der Spannkolben 9 weist eine Aufdrückfläche 21 auf, in der eine Entlüftungsöffnung 22 koaxial eingebracht ist. Bis auf den vorderen Bereich ist der Spannkolben 9 hohlzylindrisch ausgestaltet und bietet daher Aufnahmeraum für zusätzliche, nicht dargestellte, Bauelemente. Zum einen handelt es sich hierbei um einen Füllkörper 38 (Fig. 7). Der Füllkörper 38 weist eine Pilzform mit einem pilzförmigen Kopf 39 und einem daran angeordneten zylindrischen Fortsatz 40 auf. Mit dem pilzförmigen Kopf 39 ist dieser gegen eine kegelförmige Endwandung 43 der Bohrung 23 im Spannkolben 9 gedrückt und formt einen Entlüftungskanal 41 aus, der mit der Entlüftungsöffnung 22 in Strömungsverbindung steht. Im Inneren ist des Weiteren eine Druckfeder 42 (Fig. 6) angeordnet, die sich am vorderen Ende auf der Rückseite des Kopfes des Füllkörpers 38 abstützt, wobei der zylindrische Fortsatz 40 im Inneren der Druckfeder 42 angeordnet ist. Der Spannkolben 9 weist des Weiteren eine Aufnahmenut 24 für einen Dichtungsring auf, so dass im Wesentlichen keine Leckageströmung zwischen dem Spannkolben 9 und der Aufnahmebohrung 19 des Gehäuses 10 gegeben ist. Der Füllkörper 38 und die Druckfeder 42 sind aus Gründen der Übersichtlichkeit nicht in der den Fig. 2 und 3 eingezeichnet worden. Sie stellen jedoch einen Bestandteil der Spannvorrichtung 1 dar, weil sie das Verhalten der Spannvorrichtung 1 im anfänglich drucklosen Zustand und beim Druckaufbau verbessern und eine Mindestspannkraft bei kleinerem zu befüllenden Volumen der Druckkammer 27 bereitstellen, was beim Startvorgang eines Verbrennungsmotors von Vorteil ist.

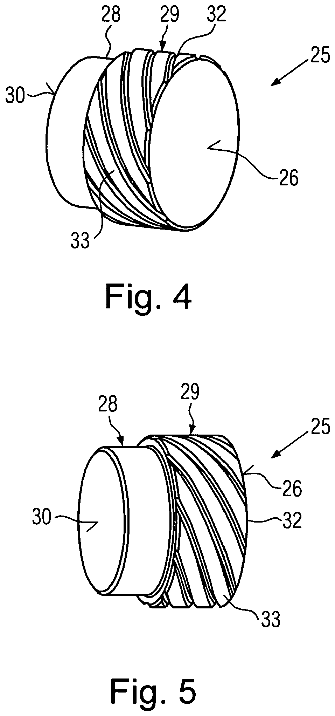

Am Grund der Aufnahmebohrung 19 befindet sich ein zylindrischer Versorgungseinsatz 25. Eine erste Ausführungsform dieses Versorgungseinsatzes 25 ist anhand der Fig. 4 und 5 noch besser zu erkennen. Der Versorgungseinsatz 25 besteht aus einem Material, das weicher ist, als das Material des Spannkolbens 9. Der Spannkolben 9 besteht vorrangig aus Stahl. Der Versorgungseinsatz 25 kann aus Messing, Aluminium oder einem Kunststoffmaterial bestehen. Hierdurch ist auch gleich ein gewisser Aufprallschutz für den Spannkolben 9 an dem Versorgungseinsatz 25 gegeben. Je nach Materialkombination führt dies auch zu erheblicher Geräuschreduktion. Die nicht dargestellte Druckfeder stützt sich dann auf der Stirnseite 26 des Versorgungseinsatzes 25 ab. Zwischen dem Versorgungseinsatz 25 und dem Spannkolben 9 ist eine Druckkammer 27 ausgeformt. Die nicht dargestellte Druckfeder und der nicht dargestellte Füllkörper sorgen für eine geeignete Reduktion des Druckkammervolumens.

Der Versorgungseinsatz 25 weist einen ersten Abschnitt 28 und einen im Durchmesser größeren zweiten Abschnitt 29 auf. Die Stirnseite 30 des ersten Abschnittes liegt am Grund der Aufnahmebohrung 19 an. Zwischen der Umfangsfläche des ersten Abschnittes 28 und der Innenfläche der Aufnahmebohrung 19 ist ein Strömungsspalt ausgebildet, in den die Versorgungsbohrung 20 mündet. Der zylindrische zweite Abschnitt 29 ist passgenau in die Aufnahmebohrung 19 eingesetzt und an seiner Umfangsfläche mit insgesamt zehn wendelförmig verlaufenden Dämpfungskanäle 32 in Form von Dämpfungsnuten versehen. Die Dämpfungskanäle 32 weisen im vorliegenden Fall einen trapezförmigen Querschnitt auf. Die Dämpfungskanäle 32 weisen weiter eine Tiefe auf, die wesentlich geringer ist, als die Abstufung zwischen dem ersten Abschnitt 28 und dem zweiten Abschnitt 29. Sämtliche Dämpfungskanäle 32 sind mit der gleichen Steigung versehen. Die Bereiche 33 zwischen den Dämpfungskanäle 32 liegen abgedichtet an der Innenwandung der Aufnahmebohrung 19 an. Hierzu kann der Versorgungseinsatz 25 in die Aufnahmebohrung 19 eingepresst sein. Diese Ausgestaltung kommt ohne Rückschlagventil zum Zuleiten von Hydraulikfluid in die Druckkammer 27 aus. Sämtliches Hydraulikfluid muss durch die Dämpfungskanäle 32 in die Druckkammer 27 hineinfließen. Hierzu stehen die Dämpfungskanäle 32 in unmittelbarer Strömungsverbindung mit dem Strömungsspalt 31. Es versteht sich von selbst, dass die Ausformung der Dämpfungskanäle 32 maßgeblichen Einfluss auf das Dämpfungsverhalten der Spannvorrichtung 1 hat. Es besteht hier eine Vielzahl an Möglichkeiten, auf das Dämpfungsverhalten Einfluss zu nehmen. Zu nennen seien beispielsweise die Querschnittsform der Dämpfungskanäle, die Abmaße der Dämpfungskanäle, die Anzahl der Dämpfungskanäle sowie der Verlauf entlang der Umfangsfläche des Versorgungseinsatzes 25.

Im Folgenden wird die Wirkungs- und Funktionsweise der oben beschriebenen Spannvorrichtung 1 kurz erläutert.

Fährt im eingeschraubten Zustand der Spannkolben 9 der Spannvorrichtung 1 aus, so geschieht dies üblicherweise durch Hydraulikfluid, welches mittels der Motorölhydraulik von der Ölpumpe zugeführt wird. Aus dem Motorblock 8 gelangt Öl in die Versorgungsringnut 15 und fließt über die Versorgungsbohrung 20 und den Strömungsspalt 31 unter den zweiten Abschnitt 29 des Versorgungseinsatzes und umgibt den ersten Abschnitt 28. Von dort aus gelangt das Hydraulikfluid in die Dämpfungskanäle 32, durchströmt diese und fließt dann in die Druckkammer 27. Hierzu muss der Gesamtströmungsquerschnitt durch die Dämpfungskanäle 32 ausreichend groß sein, damit dies gewährleistet ist.

Wenn dann im umgekehrten Fall der Spannkolben 9 aufgrund einer Schwingbewegung der Spannschiene 7 einfährt, muss diese Einfahrbewegung gedämpft werden. Der Spannkolben 9 presst nunmehr Hydraulikfluid aus der Druckkammer 27 und durch die Dämpfungskanäle 32 wieder hinaus. Dieses Zurückdrücken erfolgt selbstverständlich gegen den anstehenden Fluiddruck der Hydraulikfluidversorgung. Hier kann aufgrund geeigneter Ausgestaltungen des Versorgungseinsatzes 25 und insbesondere der Dämpfungskanäle 32 Einfluss auf das Dämpfungsverhalten genommen werden.

Anhand der Fig. 6 wird nunmehr anhand verschiedener Kolbenhubfrequenzen (50, 100 und 200 Hz) die Verteilung der Abflussströmung aus der Druckkammer 27 näher erläutert. Hierbei bedeuten die Abkürzungen
- VE: = Versorgungseinsatz 25
- EB: = Entlüftungsöffnung 22 und
- LSP: = Leckspalt zwischen Spannkolben 9 und Aufnahmebohrung 19.

Wie oben bereits erwähnt, ist der Leckspalt weitestgehend reduziert, so dass dieser maßgeblich nicht an der Dämpfung teilnimmt. Bei der gezeigten Ausführungsform hat sich bei den Tests gezeigt, dass über den Leckspalt noch 0,6 % der Abflussströmung abfließen kann. Diese Strömung liegt daher unterhalb von 2 %, bevorzugt 1 %, des gesamten Volumenstroms der Abflussströmung und ist somit im Sinne dieser Erfindung als baubedingt zu vernachlässigen.

Das Diagramm zeigt deutlich, dass bei allen drei dargestellten Kolbenhubfrequenzen der Dämpfungsanteil des Versorgungseinsatzes 25 dominiert. Bei dem Test ergaben sich folgende Werte:

| Hubfrequenz | VE | EB | LSP |
|---|---|---|---|
| [Hz] | [%] | [%] | [%] |
| 200 | 60.4 | 39.0 | 0.6 |
| 100 | 59.5 | 39.9 | 0.6 |
| 50 | 57.5 | 41.9 | 0.6 |
| ***mittel:*** | ***59.1*** | ***40.3*** | ***0.6*** |

Hieraus ist zu erkennen, dass bei steigender Kolbenhubfrequenz, was zumeist mit schneller drehendem Verbrennungsmotor einhergeht der Anteil an der Dämpfung durch den Versorgungseinsatz 25 leicht zunimmt, während er Anteil der Entlüftungsöffnung 22 leicht abnimmt.

Für die Tests wurde die Kolbenhubfrequenz als Basis gewählt, weil diese am ehesten das dynamische Verhalten der Spannvorrichtung 1 widerspiegelt. Zwar wäre alternativ auch eine Betrachtung auf der Basis des Drucks in der Druckkammer oder der Drehzahl des Verbrennungsmotors möglich; jedoch hat sich bei der Untersuchung verschiedenster Ausführungsformen gezeigt, dass das dynamische Verhalten am Besten anhand der Kolbenhubfrequenz darstellbar ist, weil hierdurch der Schwingungszustand der Steuerkette und damit der eigentlich zu dämpfende Zustand Berücksichtigung findet.

Nachdem ca. zwei Drittel der Abflussströmung durch die Dämpfungskanäle 32 abfließen, steht diese Menge an Hydraulikfluid auch gleich zur Versorgung wieder zur Verfügung. Hierdurch reduziert sich der Gesamtdurchsatz der Hydraulikfluidmenge durch die Spannvorrichtung. Bei konventionellen Ausführungsformen würde ein erheblicher Bestandteil durch den Leckspalt nach außen abfließen. Bei der vorliegenden Ausführungsform ist ein vernünftiger Kompromiss funktionaler Entlüftung und der durch die Entlüftung systembedingt noch vorhandene Dämpfung mittels der Entlüftungsöffnung 22 gegeben. Darüber hinaus ergeben sich Vorteile aufgrund dieser Dämpfungsaufteilung hinsichtlich der Druckverteilung in der Druckkammer 27.

Zur angegebenen Ausführungsform sei noch erwähnt, dass die zuströmende Menge an Hydraulikfluid zu über 99 % mittels der Dämpfungsnuten 32 und somit über den Versorgungseinsatz 25 erfolgt. Der geringe verbleibende Anteil ergibt sich aufgrund der Speicherkapazität des minimal vorhandenen Spalts zwischen dem Spannkolben 9 und der Aufnahmebohrung 19.

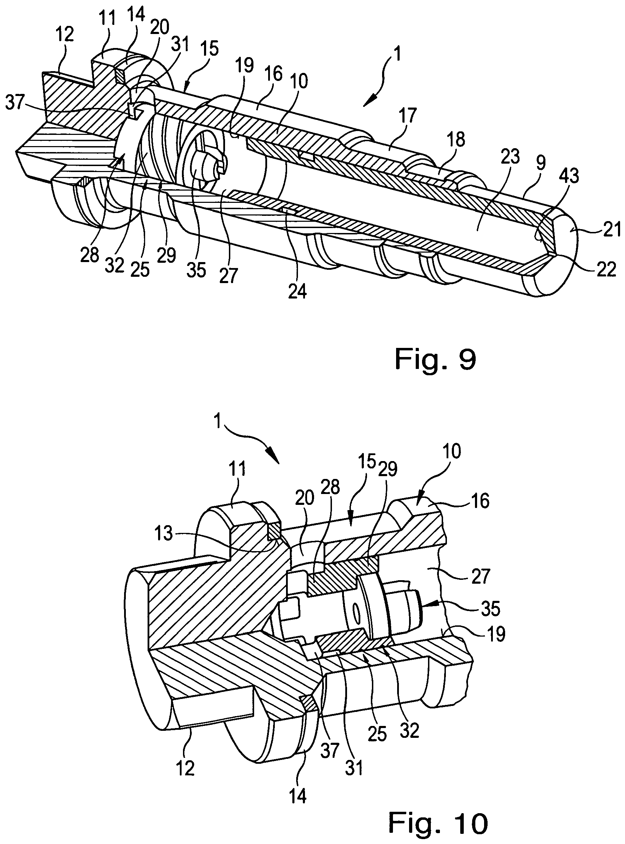

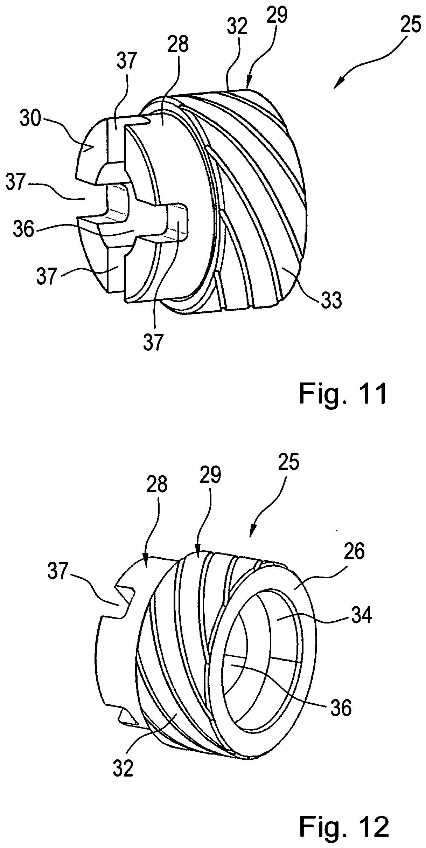

Im Folgenden wird nunmehr anhand der Fig. 9 bis 12 eine zweite Ausführungsform der vorliegenden Spannvorrichtung 1 näher erläutert. Im Folgenden wird nur auf die wesentlichen Unterschiede zum vorangegangenen Ausführungsbeispiel eingegangen, weshalb unter Verwendung gleicher Bezugsziffern auf die Beschreibung des vorangegangenen Ausführungsbeispiels ergänzend verwiesen wird. Insbesondere werden bei dieser Ausführungsform wieder die Druckfeder 42 und der Füllkörper 38 aus den Fig. 6 und 7 verwendet, die in die Druckkammer 27 eingesetzt sind. Aus Gründen der Übersichtlichkeit sind diese Bauteile in den Fig. 9 und 10 nicht dargestellt.

Der Unterschied ist in einer anderen Ausgestaltung des Versorgungseinsatzes 25 zu sehen. Dieser ist zusätzlich an seiner Stirnseite 26 mit einem Aufnahmesitz 34 ausgebildet, in dem ein Rückschlagventil 35 aufgenommen ist. Der Aufbau und die Funktionsweise des Rückschlagventils 35 sind in der Technik bekannt, weshalb dies hier nicht näher erläutert wird. Im vorliegenden Fall wird ein Kugelrückschlagventil mit einer von einer Feder vorgespannten Ventilkugel verwendet. Das Rückschlagventil 35 ermöglicht das Zuströmen von Hydraulikfluid in die Druckkammer 27 und soll möglichst ein Abströmen aus der Druckkammer 27 verhindern. Damit ein Zuströmen über den Versorgungseinsatz 25 und das Rückschlagventil 35 möglich ist, verfügt der Versorgungseinsatz 25 noch über eine zentrale Zulaufbohrung 36 und radiale Zulaufkanäle 37 an seiner Stirnseite 30, die die zentrale Zulaufbohrung 36 mit dem Strömungsspalt 31 verbinden.

Ansonsten sind alle Elemente baugleich zum vorangegangenen Ausführungsbeispiel.

Diese andere Ausgestaltung des Versorgungseinsatzes 25 mit Rückschlagventil 35 führt zu einem etwas anderen Verhalten der Zulauf- und Ablaufströmung.

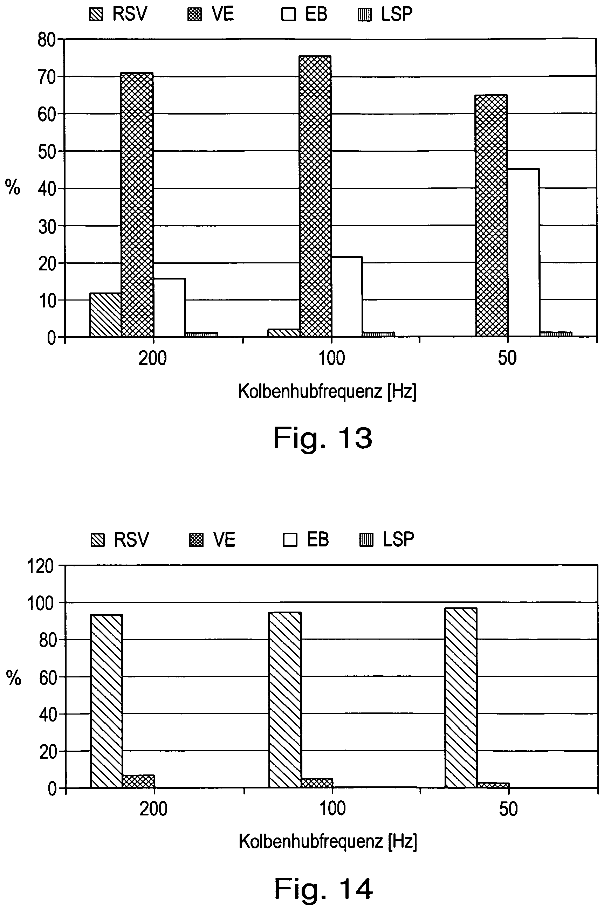

Die gezeigte Ausführungsform ist wieder bei den Kolbenhubfrequenzen von 50, 100 und 200 Hz getestet worden. In Fig. 13 ist anhand des Diagramms bei diesen Kolbenhubfrequenzen die Volumenstromverteilung der Abflussströmung dargestellt. Der Hauptanteil der Abflussströmung erfolgt wieder über die Dämpfungsnuten 32 des Versorgungseinsatzes 25. Die getestete Spannvorrichtung zeigt bei einer Kolbenhubfrequenz von 50 Hz eine ähnliche Verteilung, wie sie beim vorangegangenen Ausführungsbeispiel schon vorlag. Die Werte für die Verteilung der Abflussströmung waren beim Test wie folgt:

| Hubfrequenz | RSV | VE | EB | LSP |
|---|---|---|---|---|
| [Hz] | [%] | [%] | [%] | [%] |
| 200 | 12.7 | 70.9 | 15.8 | 0.5 |
| 100 | 2.3 | 75.0 | 22.1 | 0.6 |
| 50 | 0.0 | 64.7 | 34.7 | 0.6 |
| ***mittel:*** | ***5.0*** | ***70.2*** | ***24.2*** | ***0.6*** |

Die Abkürzung RSV steht für das Rückschlagventil 35.

Mit steigender Kolbenhubfrequenz macht sich das dynamische Verhalten des Rückschlagventils 35 bemerkbar. Zwar steigt zunächst der Anteil des Versorgungseinsatzes 25 an, während der Anteil der Entlüftungsöffnung 22 sinkt (siehe Werte für Kolbenhubfrequenz 100 Hz); allerdings beginnt nunmehr auch ein Teil der Abschlussströmung über das Rückschlagventil 35 abzufließen. Dies liegt daran, dass bei diesen Frequenzen das Rückschlagventil 35 nicht mehr vollständig folgen kann. Dieser Effekt verstärkt sich bei zunehmender Kolbenhubfrequenz (siehe Kolbenhubfrequenz 200 Hz). Der Anteil, der über das Rückschlagventil 35 abfließt, erhöht sich weiter, was auf Kosten des Anteils geht, der durch die Dämpfungskanäle 32 abfließt. Der Anteil, der durch die Entlüftungsöffnung 22 abströmt, reduziert sich allerdings weiter. Auch hier ist anhand des Diagramms zu sehen, dass ein Großteil der Dämpfung mittels des Versorgungseinsatzes 25 erfolgt, so dass der überwiegende Teil des Hydraulikfluids für eine Zuführung wieder zur Verfügung steht und nicht erst einmal der Ölversorgung zurückgeführt werden muss. Auch hier beträgt der durch den kleinen noch vorhandenen Leckspalt abfließende Volumenstrom nicht mehr als 0,6 % und hat daher im Wesentlichen keinen Einfluss auf das Dämpfungsverhalten.

Anhand der Fig. 14 ist nunmehr die Zuströmung des Hydraulikfluids bei den verschiedenen Kolbenhubfrequenzen für das zweite Ausführungsbeispiel dargestellt. Hier ist zu erkennen, dass überwiegend der Zufluss über das Rückschlagventil 35 erfolgt, wobei bei steigender Kolbenhubfrequenz dieser Anteil etwas abnimmt, während der Anteil, der über den Versorgungseinsatz 25 zuströmt, etwas zunimmt. Allerdings nimmt der Versorgungseinsatz immer auch Anteil an der Zuströmung, was deutlich macht, dass die Dämpfungskanäle 32 immer in beide Richtungen offen sind. Aufgrund des großen Zuflusses über das Rückschlagventil 35 war bei den Tests ein Zufluss über die Entlüftungseinrichtung und den Leckspalt nicht nachweisbar, weil die Strömungswiderstände sowohl durch das Rückschlagventil 25 als auch über die Dämpfungskanäle 32 viel geringer sind.

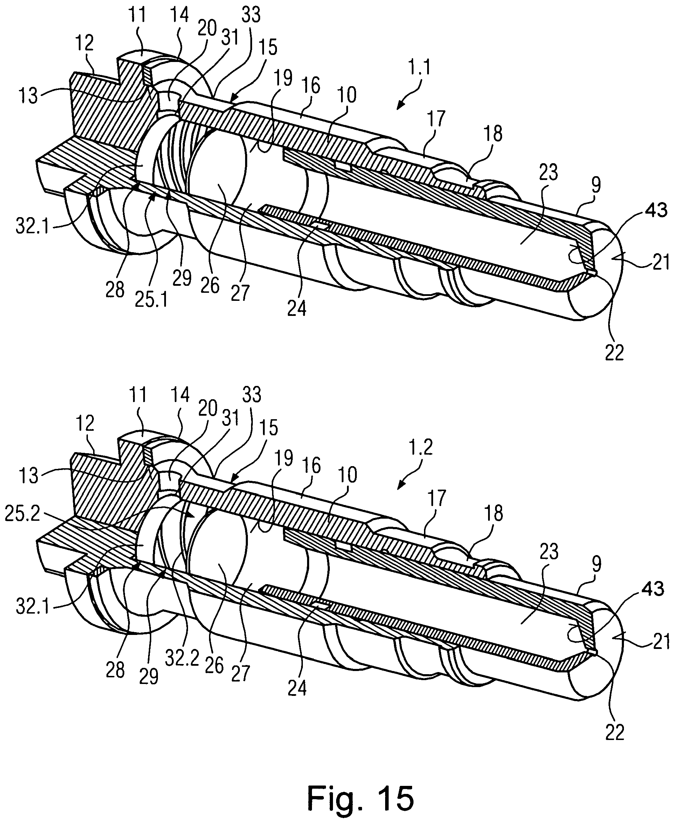

Anhand der Fig. 15 ist nunmehr eine Spannvorrichtungsserie dargestellt. Es handelt sich hierbei wieder um Kettenspanner, wie in dem ersten Ausführungsbeispiel. Die obere Spannvorrichtung 1.1. ist baugleich mit der Spannvorrichtung aus Fig. 2 ausgestaltet. Die darunter dargestellte Spannvorrichtung 1.2 ist ebenfalls baugleich ausgestaltet, mit Ausnahme des Versorgungseinsatzes 25.2. Bei diesem Versorgungseinsatz 25.2 ist lediglich die Anzahl der Dämpfungskanäle 32.2 reduziert worden auf die Zahl 5. Hierdurch erlangt die untere Spannvorrichtung 1 ein viel härteres Dämpfungsverhalten, weil weniger Hydraulikfluid auf einmal aus der Druckkammer 27 zurückgedrückt werden kann. Fig. 14 zeigt eine Spannvorrichtungsserie auf der Basis des zweiten Ausführungsbeispiels. Auch hier ist lediglich die Anzahl der Dämpfungskanäle 32.1 und 32.2 unterschiedlich, während sonst alle Bauelemente der beiden gezeigten Spannvorrichtungen 1.1 und 1.2 gleich sind.

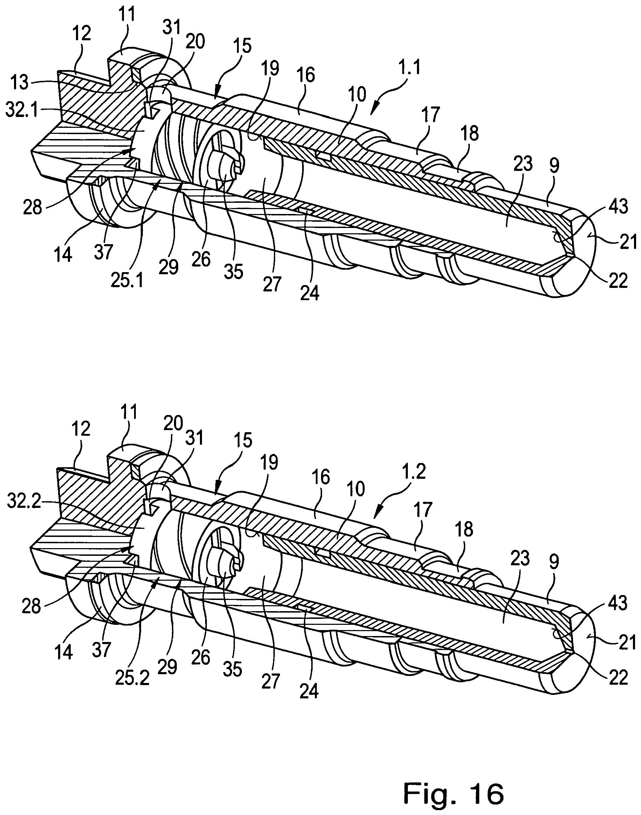

In den Fig. 15 und 16 sind aus Gründen der Übersichtlichkeit die Druckfeder 42 (siehe Fig. 6) und der Füllkörper 38 (siehe Fig. 7) jeweils nicht eingezeichnet worden. Diese Bauteile sind selbstverständlich in der Druckkammer 27 angeordnet.

Am Aufbau ist auch zu erkennen, dass durch ledigliches Austauschen des Versorgungseinsatzes (eventuell mit Rückschlagventil) eine solche Variation im Dämpfungsverhalten erzielt werden kann. Ansonsten können alle Bauteile und Abmaße beibehalten werden. Die Variationsformen sind vielfältig, wodurch sich auch eine sehr große vielfältige Anzahl unterschiedlicher Möglichkeiten zur Erzielung der unterschiedlichsten Dämpfungseigenschaften ergibt.

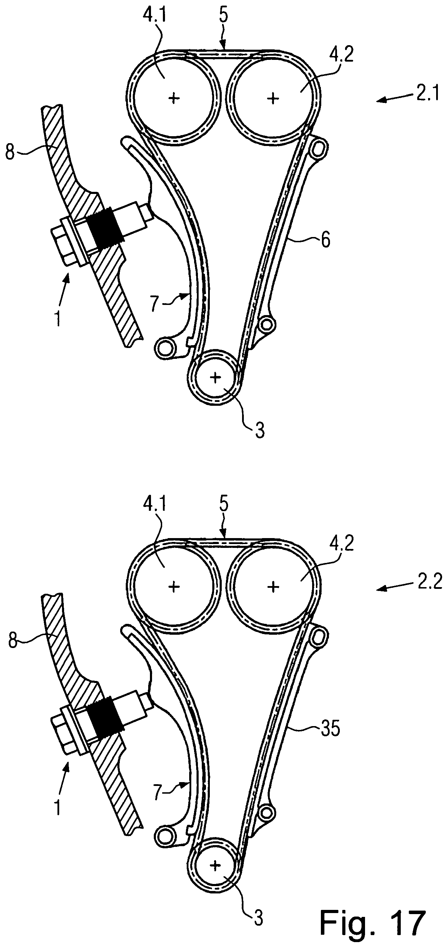

Die Fig. 17 zeigt schematisch einen ersten Kettentrieb 2.1 (oben dargestellt) und einen zweiten Kettentrieb 2.2 (unten dargestellt). Diese beiden Kettentriebe unterscheiden sich einzig und allein dadurch, dass beim oberen Kettentrieb die Spannvorrichtung 1.1 aus Fig. 15 oder 14 und im unteren Kettentrieb 2.2 die Spannvorrichtung 1.2 aus Fig. 15 oder 16 eingesetzt sind. Hierdurch wird eine Kettentriebserie erzeugt, die sich lediglich durch die Verwendung unterschiedlicher Spannvorrichtungen 1 unterscheidet. Jedoch ist es auch möglich, dass innerhalb dieser Serie neben den unterschiedlichen Spannvorrichtungen 1.1 und 1.2 auch unterschiedliche andere Elemente eingesetzt werden können. Insgesamt lässt sich aber aufgrund der reduzierten Teilezahl eine Kosteneinsparung erzielen.

## Patentansprüche

1. Spannvorrichtung (1) für ein flexibles Antriebsmittel wie Kette (5) oder Riemen, mit einem Gehäuse (10), einem im Gehäuse (10) verschiebbar geführten Spannkolben (9), einer zwischen dem Gehäuse (10) und dem Spannkolben (9) gebildeten Druckkammer (27) für Hydraulikfluid, einer im Gehäuse (10) angeordneten Fluidzuführung zur Versorgung der Druckkammer (27) mit Hydraulikfluid, einer mit der Druckkammer (27) in Fluidverbindung stehenden, die Einfahrbewegung des Spannkolbens (9) dämpfenden Dämpfungseinrichtung und einer mit der Druckkammer (27) in Fluidverbindung stehende Entlüftungseinrichtung, wobei die Dämpfungseinrichtung mindestens einen, in beide Strömungsrichtungen offenen Dämpfungskanal (32) als Bestandteil der Fluidzuführung derart aufweist, dass im Betrieb zumindest ein Teil der Versorgungsströmung durch den mindestens einen Dämpfungskanal (32) hindurch in die Druckkammer (27) einleitbar ist, und die Dämpfungseinrichtung und die Entlüftungseinrichtung derart fluidtechnisch miteinander gekoppelt sind, dass eine Abflussströmung aus der Druckkammer (27) kombiniert über die Dämpfungseinrichtung und die Entlüftungseinrichtung erfolgt und die Versorgungsströmung im Wesentlichen unabhängig von der Entlüftungseinrichtung erfolgt, und wobei die Fluidzuführung einen Versorgungseinsatz (25) aufweist, der passgenau in das Gehäuse (10) eingesetzt ist, **dadurch gekennzeichnet, dass** der mindestens eine Dämpfungskanal (32) zwischen dem Versorgungseinsatz (25) und dem Gehäuse (10) ausgebildet ist.

2. Spannvorrichtung (1) nach Anspruch 1, **dadurch gekennzeichnet, dass** das Gehäuse (10) eine Aufnahmebohrung (19) aufweist, in der der Spannkolben (9) verschiebbar aufgenommen ist, und am Grund der Aufnahmebohrung (19) der Versorgungseinsatz (25) passgenau eingesetzt ist und der mindestens eine Dämpfungskanal (32) zwischen Außenfläche des Versorgungseinsatzes (25) und Innenfläche der Aufnahmebohrung (19) gebildet ist.

3. Spannvorrichtung (1) nach Anspruch 1 oder 2, **dadurch gekennzeichnet, dass** der Versorgungseinsatz (25) einen ersten Abschnitt (28) und einen zweiten, im Umfang größeren Abschnitt (29) aufweist, der mindestens eine Dämpfungskanal (32) in dem zweiten Abschnitt (29) eingeformt ist und zwischen dem ersten Abschnitt (28) und dem Gehäuse (10) ein Strömungsspalt (31) gebildet ist, der Bestandteil der Fluidzuführung ist.

4. Spannvorrichtung (1) nach Anspruch 3, **dadurch gekennzeichnet, dass** das Gehäuse (10) eine an eine externe Ölversorgung anschließbare Versorgungsbohrung (20) als Bestandteil der Fluidzuführung aufweist, die in den Strömungsspalt (31) zwischen Gehäuse (10) und Versorgungseinsatz (25) mündet.

5. Spannvorrichtung (1) nach einem der Ansprüche 1 bis 4, **dadurch gekennzeichnet, dass** der mindestens eine Dämpfungskanal (32) wendelförmig am Umfang des Versorgungseinsatzes (25) umläuft.

6. Spannvorrichtung (1) nach einem der Ansprüche 1 bis 5, **dadurch gekennzeichnet, dass** am Versorgungseinsatz (25) mindestens zwei Dämpfungskanäle (32) vorgesehen sind, und die Bereiche zwischen den Dämpfungskanälen (32) im Wesentlichen abdichtend an dem Gehäuse (10) anliegen.

7. Spannvorrichtung (1) nach einem der Ansprüche 1 bis 6, **dadurch gekennzeichnet, dass** die Fluidzuführung ein zum Dämpfungskanal (32) hydraulisch parallel geschaltetes Rückschlagventil (35) aufweist.

8. Spannvorrichtung (1) nach Anspruch 7, **dadurch gekennzeichnet, dass** der Strömungswiderstand des mindestens einen Dämpfungskanals (32) und der Strömungswiderstand des Rückschlagventils (35) in Öffnungsrichtung so aufeinander abgestimmt sind, dass zumindest in einem Spannkolbenhubfrequenzbereich von 50 - 200 Hz mehr als 90 %, bevorzugt mehr als 94 %, der Versorgungsströmung über das Rückschlagventil (35) der Drucckammer (27) zuleitbar ist.

9. Spannvorrichtung (1) nach einem der Ansprüche 1 bis 8, **dadurch gekennzeichnet, dass** der Strömungswiderstand des mindestens einen Dämpfungskanals (32) und der Strömungswiderstand der Entlüftungseinrichtung so aufeinander abgestimmt sind, dass zumindest in einem Spannkolbenhubfrequenzbereich von 50 - 200 Hz höchstens 45 %, bevorzugt höchstens 35 %, der Abflussströmung über die Entlüftungseinrichtung aus der Druckkammer (27) ableitbar ist.

10. Spannvorrichtung (1) nach einem der Ansprüche 1 bis 9, **dadurch gekennzeichnet, dass** der Versorgungseinsatz (25) aus einem weicheren Material als das Material des Spannkolbens (9) hergestellt ist.

11. Spannvorrichtung (1) nach einem der vorangegangenen Ansprüche, **dadurch gekennzeichnet, dass** zwischen Spannkolben (9) und der Aufnahmebohrung (19) im Gehäuse (10) eine Gleitdichtung angeordnet ist.

12. Spannvorrichtungsserie, umfassend mindestens eine erste und mindestens eine zweite Spannvorrichtung (1.1; 1.2) nach einem der Ansprüche 1 bis 11, **dadurch gekennzeichnet, dass** die erste und die zweite Spannvorrichtung (1.1; 1.2) eine Gehäusebohrung (19) zur Aufnahme des Spannkolbens (9) und einen Spannkolben (9) von jeweils im Durchmesser standardisierter gleicher Größe aufweisen und die Dämpfungseinrichtung der mindestens einen ersten Spannvorrichtung (1.1) sich von der Dämpfungseinrichtung der mindestens einen zweiten Spannvorrichtung (1.2) in der Dämpfungscharakteristik unterscheidet, wobei die unterschiedlichen Dämpfungscharakteristiken mittels unterschiedlich bemaßter und/oder ausgestalteter Versorgungseinsätze (25) erhalten sind.

13. Umschlingungsgetriebe mit einem flexiblen Antriebsmittel wie Kette (5) oder Riemen, mindestens zwei mit dem Antriebsmittel in Wirkbeziehung stehender Getrieberäder (3, 4.1, 4.2) und einer Spannvorrichtung (1) nach einem der Ansprüche 1 bis 11.

14. Umschlingungsgetriebeserie, umfassend mindestens ein erstes Umschlingungsgetriebe (2.1) und mindestens ein zweites Umschlingungsgetriebe (2.2), wobei das erste Umschlingungsgetriebe (2.1) eine erste Spannvorrichtung (1.1) aus einer Spannvorrichtungsserie gemäß Anspruch 12 und das zweite Umschlingungsgetriebe (2.2) eine zweite, eine unterschiedliche Dämpfungscharakteristik aufweisende Spannvorrichtung (1.2) aus einer Spannvorrichtungsserie gemäß Anspruch 12 aufweist.

## Claims

1. Tensioning device (1) for a flexible drive device, such as a chain (5) or belt, with a housing (10), a tensioning piston (9) that is arranged in a sliding manner in the housing (10), a pressure reservoir (27) for hydraulic fluid that is formed between the housing (10) and the tensioning piston (9), a fluid supply that is arranged in the housing (10) to supply the pressure reservoir (27) with hydraulic fluid, a damping device that has a physical fluid connection to the pressure reservoir (27) and damps the retracting motion of the tensioning piston (9), and a venting device that has a physical fluid connection to the pressure reservoir (27), whereby the damping device has at least one damping channel (32) that is open in both flow directions as a component of the fluid supply in such a way that during operation, at least a portion of the supply stream is fed through the at least one damping channel (32) into the pressure reservoir (27), and the damping device and the venting device are coupled with each other by fluid engineering means such that a drainage flow from the pressure reservoir (27) occurs via the damping device and the venting device in combination, and the supply flow occurs predominantly independently of the venting device, and whereby the fluid supply has a supply insert (25) that is inserted into the housing (10) with an accurate fit, **characterized in that** the at least one damping channel (32) is formed between the supply insert (25) and the housing (10).

2. Tensioning device (1) in accordance with claim 1, **characterized in that** the housing (10) has a receiving bore (19) in which the tensioning piston (9) is accommodated in a sliding manner, and into which the supply insert (25) is inserted with an accurate fit in the base of the receiving bore (19), and the at least one damping channel (32) is formed between the exterior surface of the supply insert (25) and the interior surface of the receiving bore (19).

3. Tensioning device (1) in accordance with claim 1 or 2, **characterized in that** the supply insert (25) has a first section (28) and a second, larger diameter section (29), the at least one damping channel (32) is formed in the second section (29), and a flow gap (31) is formed between the first section (28) and the housing (10), which is a component of the fluid supply.

4. Tensioning device (1) in accordance with claim 3, **characterized in that** the housing (10) has a supply bore (20) as a component of the fluid supply, where said supply bore (20) can be connected to an external oil supply and terminates in the flow gap (31) between the housing (10) and the supply insert (25).

5. Tensioning device (1) in accordance with one of the claims 1 to 4, **characterized in that** the at least one damping channel (32) runs along the circumference of the supply insert (25) in a helical manner.

6. Tensioning device (1) in accordance with one of the claims 1 to 5, **characterized in that** the supply insert (25) is equipped with at least two damping channels (32), and the regions between the damping channels (32) form a nearly complete contact seal with the housing (10).

7. Tensioning device (1) in accordance with one of the claims 1 to 6, **characterized in that** the fluid supply has a check valve (35) that is hydraulically actuated in parallel to the damping channel (32).

8. Tensioning device (1) in accordance with claim 7, **characterized in that** the flow resistance of the at least one damping channel (32) and the flow resistance of the check valve (35) are jointly adjusted in the opening direction in such a manner that at least in a tensioning piston stroke frequency range of 50 - 200 Hz, greater than 90 %, preferably greater than 94 %, of the supply stream can be supplied to the pressure reservoir (27) via the check valve (35).

9. Tensioning device (1) in accordance with one of the claims 1 to 8, **characterized in that** the flow resistance of the at least one damping channel (32) and the flow resistance of the venting device are matched to one another in such a manner that at least for a tensioning piston stroke frequency of 50 - 200 Hz, no more than 45 %, preferably no more than 35 % of the drainage flow can be drained from the pressure reservoir (27) via the venting device.

10. Tensioning device (1) in accordance with one of the claims 1 to 9, **characterized in that** the supply insert (25) is manufactured from a softer material than the material of the tensioning piston (9).

11. Tensioning device (1) in accordance with one of the aforementioned claims, **characterized in that** a slip seal is arranged in the housing (10) between the tensioning piston (9) and the receiving bore (19).

12. Tensioning device series, encompassing at least one first and at least one second tensioning device (1.1; 1.2) in accordance with one of the claims 1 to 11, **characterized in that** the first and the second tensioning devices (1.1; 1.2) each have a housing bore (19) to locate the tensioning piston (9) and a tensioning piston (9) of an identically dimensioned standardized diameter, and the damping properties of the damping device of the at least one first tensioning device (1.1) differ from those of the at least one second tensioning device (1.2), where the different damping properties are obtained by means of differently dimensioned and/or designed supply inserts (25).

13. Circumferential engagement device transmission with a flexible drive device, such as a chain (5) or belt, at least two drive wheels (3, 4.1, 4.2) that are functionally engaged with the drive device, and a tensioning device (1) in accordance with one of the claims 1 to 11.

14. Circumferential engagement device transmission series, encompassing at least one first circumferential engagement device transmission (2.1) and at least one second circumferential engagement device transmission (2.2), where the first circumferential engagement device transmission (2.1) has a first tensioning device (1.1) from the tensioning device series in accordance with claim 12 and the second circumferential engagement device transmission (2.2) has a second tensioning device (1.2) from a tensioning device series in accordance with claim 12, where said second tensioning device (1.2) has different damping characteristics.

## Revendications

1. Dispositif tendeur (1) pour un moyen d'entrainement flexible tel qu'une chaine (5) ou une courroie, comprenant un corps (10), un piston tendeur (9) guidé de manière coulissante dans le corps (10), une chambre de pression (27) pour du fluide hydraulique, qui est formée entre le corps (10) et le piston tendeur (9), une amenée de fluide agencée dans le corps (10) et destinée à alimenter la chambre de pression (27) en fluide hydraulique, un dispositif d'amortissement en liaison fluidique avec la chambre de pression (27) et amortissant le mouvement de rentrée du piston tendeur (9), et un dispositif de purge d'air en liaison fluidique avec la chambre de pression (27),
dispositif tendeur
dans lequel le dispositif d'amortissement comprend au moins un canal d'amortissement (32), ouvert dans les deux directions d'écoulement, en tant que partie intégrante de l'amenée de fluide de façon telle, qu'en fonctionnement, au moins une partie de l'écoulement d'alimentation peut être envoyée dans la chambre de pression (27) à travers ledit au moins un canal d'amortissement (32), et le dispositif d'amortissement et le dispositif de purge d'air sont couplés sur le plan de la technique des fluides de manière telle qu'un écoulement d'évacuation de la chambre de pression (27) s'effectue de manière combinée par l'intermédiaire du dispositif d'amortissement et du dispositif de purge d'air, et l'écoulement d'alimentation s'effectue sensiblement de façon indépendante du dispositif de purge d'air, et
dans lequel l'amenée de fluide comprend un insert d'alimentation (25), qui est inséré de manière parfaitement ajustée dans le corps (10),
**caractérisé en ce que** ledit au moins un canal d'amortissement (32) est formé entre l'insert d'alimentation (25) et le corps (10).

2. Dispositif tendeur (1) selon la revendication 1, **caractérisé en ce que** le corps (10) présente un alésage d'accueil (19) dans lequel est logé de manière coulissante, le piston tendeur (9), et dans le fond de l'alésage d'accueil (19) est inséré de manière parfaitement ajustée, l'insert d'alimentation (25), et ledit au moins un canal d'amortissement (32) est formé entre la surface extérieure de l'insert d'alimentation (25) et la surface intérieure de l'alésage d'accueil (19) .

3. Dispositif tendeur (1) selon la revendication 1 ou la revendication 2, **caractérisé en ce que** l'insert d'alimentation (25) présente un premier tronçon (28) et un deuxième tronçon (29) de circonférence plus grande, ledit au moins un canal d'amortissement (32) est formé dans ledit deuxième tronçon (29), et entre le premier tronçon (28) et le corps (10) est formé un interstice d'écoulement (31), qui fait partie de l'amenée de fluide.

4. Dispositif tendeur (1) selon la revendication 3, **caractérisé en ce que** le corps (10) comporte un alésage d'alimentation (20) pouvant être raccordé à une alimentation en huile externe, en tant que partie intégrante de l'amenée de fluide, qui débouche dans l'interstice d'écoulement (31) entre le corps (10) et l'insert d'alimentation (25).

5. Dispositif tendeur (1) selon l'une des revendications 1 à 4, **caractérisé en ce que** ledit au moins un canal d'amortissement (32) s'étend de manière périphérique, en hélice, sur la périphérie de l'insert d'alimentation (25).

6. Dispositif tendeur (1) selon l'une des revendications 1 à 5, **caractérisé en ce que** sur l'insert d'alimentation (25) sont prévus au moins deux canaux d'amortissement (32), et les zones entre les canaux d'amortissement (32) s'appuient sensiblement de manière étanche contre le corps (10).

7. Dispositif tendeur (1) selon l'une des revendications 1 à 6, **caractérisé en ce que** l'amenée de fluide comporte une valve antiretour (35) montée hydrauliquement en parallèle au canal d'amortissement (32) .

8. Dispositif tendeur (1) selon la revendication 7, **caractérisé en ce que** la résistance à l'écoulement dudit au moins un canal d'amortissement (32) et la résistance à l'écoulement de la valve antiretour (35) dans la direction d'ouverture, sont adaptées mutuellement l'une à l'autre de manière telle, qu'au moins dans une plage de fréquence du piston tendeur de 50 - 200 Hz, plus de 90%, de préférence plus de 94%, de l'écoulement d'alimentation peut être amené à la chambre de pression (27) par l'intermédiaire de la valve antiretour (35).

9. Dispositif tendeur (1) selon l'une des revendications 1 à 8, **caractérisé en ce que** résistance à l'écoulement dudit au moins un canal d'amortissement (32) et la résistance à l'écoulement du dispositif de purge d'air, sont adaptées mutuellement l'une à l'autre de manière telle, qu'au moins dans une plage de fréquence du piston tendeur de 50 - 200 Hz, au plus 45%, de préférence au plus 35%, de l'écoulement d'évacuation peut évacué de la chambre de pression (27) par l'intermédiaire du dispositif de purge d'air.

10. Dispositif tendeur (1) selon l'une des revendications 1 à 9, **caractérisé en ce que** l'insert d'alimentation (25) est réalisé en un matériau plus tendre que le matériau du piston tendeur (9).

11. Dispositif tendeur (1) selon l'une des revendications précédentes, **caractérisé en ce qu'**entre le piston tendeur (9) et l'alésage d'accueil (19) dans le corps (10), est agencé un joint d'étanchéité glissant.

12. Série de dispositifs tendeurs, comprenant au moins un premier et au moins un deuxième dispositif tendeur (1.1; 1.2) selon l'une des revendications 1 à 11, **caractérisée en ce que** le premier et le deuxième dispositif tendeur (1.1; 1.2) comportent un alésage de corps (19) destiné à accueillir le piston tendeur (9), et un piston tendeur (9), chacun respectivement d'une grandeur en diamètre identique, standardisée, et le dispositif d'amortissement dudit au moins un premier dispositif tendeur (1.1) se différencie, quant à sa caractéristique d'amortissement, du dispositif d'amortissement dudit au moins un deuxième dispositif tendeur (1.2), les caractéristiques d'amortissement différentes étant obtenues au moyen d'inserts d'alimentation (25) dimensionnés et/ou configurés de manière différente.

13. Transmission d'entrainement à enroulement comprenant un moyen d'entrainement flexible tel qu'une chaine (5) ou une courroie, au moins deux roues de transmission (3, 4.1, 4.2) en liaison interactive avec le moyen d'entrainement, et un dispositif tendeur (1) selon l'une des revendications 1 à 11.

14. Série de transmissions d'entrainement à enroulement comprenant au moins une première transmission d'entrainement à enroulement (2.1) et au moins une deuxième transmission d'entrainement à enroulement (2.2), la première transmission d'entrainement à enroulement (2.1) comportant un premier dispositif tendeur (1.1) d'une série de dispositifs tendeurs selon la revendication 12, et la deuxième transmission d'entrainement à enroulement (2.2) comportant un deuxième dispositif tendeur (1.2) d'une série de dispositifs tendeurs selon la revendication 12, qui présente une caractéristique d'amortissement différente.
